# EUROPÄISCHE PATENTSCHRIFT

(11) **EP 0 590 546 B1**
(45) Veröffentlichungstag und Bekanntmachung des Hinweises auf die Patenterteilung: **29.05.1996**
(21) Anmeldenummer: 93115499.1
(22) Anmeldetag: 25.09.1993
(51) Int. Cl.: H01F 36/00

(54) **SCHIENENTRIEBFAHRZEUG MIT EINEM SUPRALEITENDEN TRANSFORMATOR**
RAILWAY TRACTION UNIT WITH A SUPERCONDUCTIVE TRANSFORMER
ENGIN DE TRACTION FERROVIAIRE AVEC UN TRANSFORMATEUR SUPRACONDUCTEUR

(30) Priorität: 30.09.1992 DE 4232703
(43) Veröffentlichungstag der Anmeldung: 06.04.1994
(73) Patentinhaber: ABB PATENT GmbH, D-68309 Mannheim (DE)
(72) Erfinder: Bonmann, Dietrich, Dr., D-67117 Limburgerhof (DE)
(74) Vertreter: Rupprecht, Klaus, Dipl.-Ing.

(56) Entgegenhaltungen:
- DE-A- 3 914 426
- PATENT ABSTRACTS OF JAPAN vol. 15, no. 53 (M-1079)7. Februar 1991 & JP-A-02 286 442 (FURUKAWA ELECTRIC CO.)
- PATENT ABSTRACTS OF JAPAN vol. 13, no. 321 (E-790)(3669) 20. Juli 1989 & JP-A-01 089 413 (TOSHIBA CORP.)
- DATABASE WPI Week 9139, Derwent Publications Ltd., London, GB; AN 91-286284 & SE-A-8 904 117 (ASEA BROWN BOVERI) 7. Juni 1991

## Beschreibung

Die Erfindung betrifft ein Schienentriebfahrzeug mit einem Transformator zu dessen Stromversorgung und mit einer Kältemittelversorgungseinrichtung.

Ein Hauptanwendungsgebiet für Transformatoren herkömmlicher Bauart sind ganz allgemein Kraftwerksanlagen zur Erzeugung von Elektrizität. Bei derartigen Anlagen ist die Größe des benötigten Transformators von nachrangiger Bedeutung. Ein weiteres Anwendungsgebiet für Transformatoren bietet der Einsatz in elektrischen Schienenfahrzeugen. Hierbei wird üblicherweise die Fahrdrahtspannung mittels des implementierten Transformators auf die Speisespannung der Fahrmotoren bzw. der Stromrichter herabgesetzt. Für derartige sogenannte Traktionstransformatoren und ihre notwendigen Zusatzeinrichtungen, wie Öl- bzw. Luft-Kühler einschließlich erforderlicher Umwälzpumpen gelten starke Einschränkungen in bezug auf Gewicht und Abmessungen. Hieraus resultieren letztendlich im Vergleich zu stationären Leistungstransformatoren, die solchen Einschränkungen nicht unterworfen sind, hohe Verlustleistungen, die sich in einem niedrigen Wirkungsgrad auswirken.

Ein Schienentriebfahrzeug der eingangs genannten Art ist bekannt aus der SE-A-8904117. Hierbei ist der Transformator ölgefüllt, wobei das Öl zur Kühlung dient, das heißt zur Abfuhr der Verlustwärme einer vom Öl durchströmten als Wärmetauscher ausgebildeten Kältemittelversorgungseinrichtung, die mit dem Transformator verbunden ist.

Ausgehend vom vorstehend genannten Stand der Technik ist es Aufgabe der Erfindung, ein Schienentriebfahrzeug mit einem Transformator der eingangs genannten Art zu schaffen, das einen guten Wirkungsgrad aufweist bei Vermeidung der hohen Verluste infolge räumlicher und gewichtsbezogener Beschränkungen, die durch den Transformator resultieren.

Die Lösung dieser Aufgabe besteht erfindungsgemäß in den kennzeichnenden Merkmalen des Patentanspruchs 1. Danach ist vorgesehen, daß ein supraleitender Transformator gemeinsam mit einer Kältemittelversorgungseinrichtung zum Einsatz gelangt, und daß die Kältemittelversorgungseinrichtung nur einen als Kältemitteltank dienenden Flüssiggasbehälter aufweist, der mit dem Transformator verbunden ist.

Transformatoren mit supraleitenden Wicklungen sind seit einigen Jahren Gegenstand von zahlreichen weltweiten Entwicklungsaktivitäten. Aufgrund der niedrigen Betriebstemperatur von 4 bis 6 K, die für die heute großtechnisch verfügbaren Supraleiter zwecks Einhaltung ihrer Supraleitfähigkeit erforderlich ist, ist der Einsatz von teuren mit Helium betriebenen Kälteanlagen erforderlich. Ein Magnetsystem mit einer derartigen Kälteanlage ist beispielsweise aus der DE-OS 3 743 033 bekannt geworden.

Für den Betrieb solcher Kälteanlagen werden zur Erzeugung von einem Watt Kälteleistung bei 4 K zwischen 1500 W bei kleinen Nennleistungen und 350 W Antriebsleistung bei Großanlagen benötigt. Nicht zuletzt aus diesem Grund ist der kommerzielle Einsatz von Transformatoren mit supraleitenden Spulenwicklungen bisher noch nicht in nennenswertem Maße erfolgt. Zudem weisen Gaskälteanlagen einen ungünstigen Teillastwirkungsgrad auf, der sich zusätzlich nachteilig auf die Leistungsbilanz auswirkt. Aus den vorgenannten Gründen wird daher im Vergleich zu ölgekühlten Transformatoren ein wirtschaftlich attraktiver Einsatz von supraleitenden Wicklungen für Leistungstransformatoren nur für große Nennleistungen und für den überwiegenden Vollastbetrieb erwartet. Dies gilt auch für den Einsatz der zur Zeit in der Entwicklung befindlichen sogenannten Hochtemperatursupraleiter (HTSL) mit Betriebstemperaturen um den Siedepunkt flüssigen Stickstoffs.

Mit der Auffindung der Hochtemperatursupraleiter ergaben sich neue Anwendungsperspektiven für den Einsatz von supraleitenden Wicklungen. Da die erforderliche Eingangsleistung zur Erzeugung von 1 W Kälteleistung nur noch 15 bis 35 W - abhängig von der Anlagengröße - beträgt, können auch kleinere Leistungstransformatoren wirtschaftlich betrieben werden. Eine untere Anwendungsgrenze kann mit ca. 100 MVA angegeben werden.

In bevorzugter Weiterbildung der Erfindung ist als Kältemittel flüssiger Stickstoff vorgesehen, dessen im Vergleich zu Helium etwa 10-fache Verdampfungswärme es ermöglicht, bei einem Volumen von 1 bis 2 m³ und ca. 3 t Gesamtgewicht die Kühlung eines für diesen Einsatzzweck erforderlichen supraleitenden Transformators für 2 bis 3 Tage zu gewährleisten.

Eine weitere Ausgestaltung der Erfindung kann darin bestehen, daß ein Kältemitteltank stationär auf dem Schienentriebfahrzeug angeordnet ist und über ebenfalls im Stand der Technik bekannte Befüllungseinrichtungen, insbesondere Schnellbefüllungseinrichtungen mit dem Kältemittel versorgt wird.

In weiterer Ausgestaltung der Erfindung kann vorgesehen sein, daß der als Kältemitteleinrichtung dienende Kältemitteltank auswechselbar angeordnet ist, um auf diese Weise eine kontinuierliche Kältemittelversorgung des supraleitenden Transformators sicherzustellen. Dabei erfolgt die Ankopplung der Komponenten mittels im Stand der Technik bekannter Kupplungseinrichtungen.

Gemäß einer weiteren Variante kann anstelle eines Kältemitteltanks auch vorgesehen sein, daß zwei oder mehr kleinere Kältemitteltanks auswechselbar auf dem Schienentriebfahrzeug untergebracht sind, so daß sichergestellt ist, daß zumindest ein Kältemitteltank ständig in Verbindung steht mit dem supraleitenden Transformator, während der Austausch des oder der leeren anderen Tanks gegen gefüllte Tanks erfolgt.

Der Einsatz eines erfindungsgemäßen supraleitenden Transformators in Schienentriebfahrzeugen hat, zumindest was die Auswertung der Energiebilanz erkennen läßt, gegenüber herkömmlichen Transformatoren erhebliche Vorteile.

Unter Annahme von Wechselstromverlusten des Supraleiters, die man bisher an einigen Materialproben gemessen hat, sind Gesamtverluste zu erwarten, die weniger als 25 % derer des herkömmlichen, ölgekühlten Traktionstransformators betragen.

Ein weiterer Vorteil, der mit dem Einsatz supraleitender Traktionstransformatoren verbunden ist, ist im verminderten Gewicht eines solchen erfindungsgemäßen Transformators zu sehen, da es nur ca. 75 % des ölgekühlten Transformators beträgt, d. h., das Gewicht eines erfindungsgemäßen Transformators einschließlich des erforderlichen Kältemitteltanks ist deutlich geringer als das Gewicht eines konventionellen Transformators ohne Kühleinrichtungen. Hierbei ist zu berücksichtigen, daß ein für den Betrieb von herkömmlichen Transformatoren erforderlicher Öl- oder Luft-Kühler hier nicht erforderlich ist.

Ein anderer wesentlicher Vorteil des erfindungsgemäßen supraleitenden Transformators gegenüber dem herkömmlichen öl- oder luftgekühlten Transformator ist in dem um etwa ein Drittel verminderten Raumbedarf zu sehen. Dies bedeutet, daß sich ein erfindungsgemäßer supraleitender Transformator gemeinsam mit dem erforderlichen Kältemitteltank in etwa dem gleichen Volumen wie der herkömmliche ölgekühlte Transformator mit Kühler unterbringen läßt.

Eine Ergänzung des verbrauchten Kältemittels ist, wie erwähnt, alle 2 bis 3 Tage erforderlich und kann innerhalb kurzer Zeit aus einem Standtank oder einer Kälteanlage, welche mit gutem Wirkungsgrad entsprechend viele Schienentriebfahrzeuge versorgt, aufgefüllt werden. Diesbezügliche Einrichtungen, insbesondere zur Versorgung mit Flüssigstickstoff gehören zum Stand der Technik.

Als letzter, jedoch deswegen nicht weniger bedeutsamer Vorteil ist hervorzuheben, daß der erfindungsgemäße supraleitende Transformator keinerlei Öl enthält, so daß Gefahren für die Umwelt durch Leckagen oder Brand entfallen.

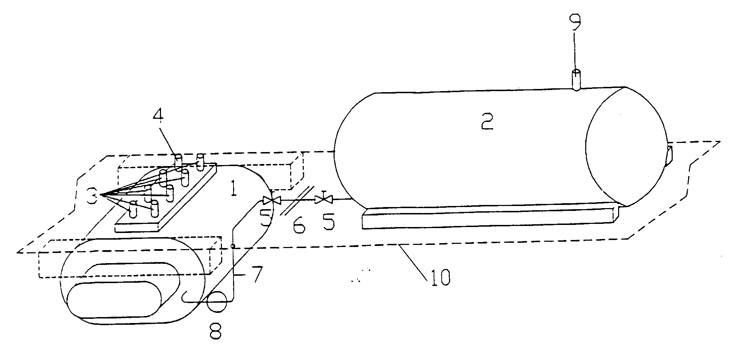

Anhand eines in der Zeichnung dargestellten Ausführungsbeispieles sollen die Erfindung, vorteilhafte Ausgestaltungen und besondere Vorteile der Erfindung näher erläutert und beschrieben werden.

Es zeigt die einzige Figur:
Eine schematische Darstellung der Anordnung eines erfindungsgemäßen Transformators auf einer elektrischen Lokomotive.

In der einzigen Figur ist ein supraleitender Transformator 1 gemäß der Erfindung gemeinsam mit einem mit Flüssiggas insbesondere Stickstoff befüllten Vorratstank 2 im symbolisch durch eine Strichlinie gekennzeichneten Maschinenraum 10 eines nicht näher dargestellten elektrischen Triebfahrzeugs angeordnet. Dabei hängt der supraleitende Transformator 1 unter dem Boden des Triebfahrzeugs zwischen den ebenfalls nicht näher dargestellten Fahrgestellen. Diese hängende Unterfluranordnung, die auch bei konventionellen Transformatoren häufig gewählt wird, entspringt dem Wunsch nach einem tiefliegenden Schwerpunkt.

Während in der gezeigten Darstellung eine liegende Anordnung des supraleitenden Transformators 1 vorgesehen ist, könnte jedoch auch eine senkrecht stehende Einbaulage, wie sie bei konventionellen Transformatoren üblich ist, ebenfalls vorgesehen werden.

An der Oberseite des Transformators 1 befinden sich gasgekühlte Stromdurchführungen 3, deren Stromleiter als Wärmetauscher ausgebildet sind, die von dem kalten Stickstoffgas gekühlt werden, welches durch die Verdampfung von flüssigem Stickstoff infolge elektrischer Verluste und Wärmelecks entsteht. Durch diese Gaskühlung wird eine Wärmeeinbringung in den Transformatorkryostaten durch die Stromdurchführungen reduziert. Zur Vermeidung unzulässigen Überdrucks im Kryostaten, z. B. bei Störfällen, ist ein Überdruckventil 4 vorgesehen.

Der Transformator 1 ist über eine wärmeisolierte Flüssiggasleitung 7 mit dem Vorratstank 2 verbunden, aus welchem das verdampfende Kühlmittel kontinuierlich nachgefüllt wird. Zum Schutz des Vorratstanks 2 vor zurückströmendem flüssigen und gasförmigen Kühlgas sowie vor zu hohem Überdruck ist in der Flüssiggasleitung 7 ein Rückschlagventil 8 vorgesehen. Außerdem befindet sich in der Flüssiggasleitung 7 eine lösbare Verbindungsstelle 6, welche es ermöglicht, bei Wartungsarbeiten, z. B. Füllen oder Wechseln des bzw. der Vorratstanks 2, diesen von dem Transformator 1 zu lösen. Hierzu sind beiderseits der lösbaren Verbindung 6 je ein Absperrventil 5 in der Flüssiggasleitung 7 angeordnet. Bei Einsatz von Wechselbehältern kann die lösbare Verbindung 6 auch als Schnellkopplung ausgebildet sein.

Die Befüllung des Vorratstanks 2 erfolgt über eine an seiner Oberseite angeordnete Befüll- und Sicherheitsarmatur 9.

## Patentansprüche

1. Elektrisches Schienentriebfahrzeug, insbesondere elektrische Lokomotive mit einem Transformator (1) zu dessen Stromversorgung sowie mit einer Kältemittelversorgungseinrichtung, dadurch gekennzeichnet, daß ein supraleitender Transformator (1) vorgesehen ist, der gemeinsam mit der Kältemittelversorgungseinrichtung auf dem Schienentriebfahrzeug angeordnet ist, und daß die Kältemittelversorgungseinrichtung ausschließlich von einem als Kältemitteltank dienenden Flüssiggasbehälter (2) gebildet ist, der mit dem supraleitenden Transformator (1) verbunden ist.

2. Transformator nach Anspruch 1, dadurch gekennzeichnet, daß als Kältemittel flüssiger Stickstoff vorgesehen ist.

3. Transformator nach einem der Ansprüche 1 oder 2, dadurch gekennzeichnet, daß der Kältemitteltank mittels einer Schnellbefülleinrichtung aus einem Standtank oder aus einer Kältemittelanlage mit Kältemittel, insbesondere mit Stickstoff, befüllbar ist.

4. Transformator nach einem der vorherigen Ansprüche, dadurch gekennzeichnet, daß der als Kältemittelversorgungseinrichtung dienende Kältemitteltank auswechselbar angeordnet ist.

5. Transformator nach Anspruch 4, dadurch gekennzeichnet, daß wenigstens zwei auswechselbare Kältemitteltanks vorgesehen sind.

6. Transformator nach einem der Ansprüche 3 oder 4, dadurch gekennzeichnet, daß der Austausch des leeren Kältemitteltanks gegen einen vollen Kältemitteltank vorgesehen ist.

## Claims

1. Electric railway traction unit, in particular electric locomotive with a transformer for supplying it with power and with a coolant supply device, characterized in that a superconductive transformer is provided which, together with the coolant supply device, is arranged on the railway traction unit, and in that the coolant supply device is formed exclusively by a liquid gas container which serves as a coolant tank and is connected to the superconductive transformer.

2. Transformer according to Claim 1, characterized in that liquid nitrogen is provided as coolant.

3. Transformer according to either of Claims 1 or 2, characterized in that the coolant tank can be filled with coolant, in particular with nitrogen, from a floormounted tank or from a coolant system by means of a highspeed filling device.

4. Transformer according to one of the preceding claims, characterized in that the coolant tank which serves as a coolant supply device is arranged in a replaceable manner.

5. Transformer according to Claim 4, characterized in that at least two replaceable coolant tanks are provided.

6. Transformer according to either of Claims 3 or 4, characterized in that there is provision for the replacement of the empty coolant tank with a full coolant tank.

## Revendications

1. Engin de traction ferroviaire électrique, en particulier locomotive électrique, comprenant un transformateur pour son alimentation en courant ainsi qu'un dispositif d'alimentation en frigorigène, **caractérisé** par le fait qu'il est prévu un transformateur supraconducteur qui est disposé conjointement avec le dispositif d'alimentation en frigorigène sur l'engin de traction ferroviaire, et que le dispositif d'alimentation en frigorigène est constitué exclusivement par un réservoir de gaz liquéfié servant de citerne de frigorigène et relié au transformateur supraconducteur.

2. Transformateur suivant la revendication 1, **caractérisé** par le fait que le frigorigène est constitué par de l'azote liquide.

3. Transformateur suivant l'une des revendications 1 ou 2, **caractérisé** par le fait que la citerne de frigorigène peut être remplie de frigorigène, en particulier d'azote, au moyen d'un dispositif de remplissage rapide à partir d'une citerne stationnaire ou d'une installation frigorifique.

4. Transformateur suivant l'une des revendications précédentes, **caractérisé** par le fait que la citerne de frigorigène servant de dispositif d'alimentation en frigorigène est disposée de façon échangeable.

5. Transformateur suivant la revendication 4, **caractérisé** par au moins deux citernes de frigorigène échangeables.

6. Transformateur suivant l'une des revendications 3 ou 4, **caractérisé** par le fait qu'il est prévu un échange de la citerne de frigorigène vide contre une citerne de frigorigène pleine.
